Europäisches Patentamt

European Patent Office

Office européen des brevets

(19)

(11) Veröffentlichungsnummer: **0 399 514**

**A1**

(12) # EUROPÄISCHE PATENTANMELDUNG

(21) Anmeldenummer: 90109840.0

(51) Int. Cl.5: **E04B 1/86**

(22) Anmeldetag: 23.05.90

(30) Priorität: 23.05.89 DE 3916799

(43) Veröffentlichungstag der Anmeldung:
28.11.90 Patentblatt 90/48

(84) Benannte Vertragsstaaten:
AT BE CH DE DK ES FR GB GR IT LI LU NL SE

(71) Anmelder: STO PORAVER GMBH
An der Zwerch 7
D-8882 Lauingen(DE)

(72) Erfinder: **Kubbutat, Albert**
**Buhmayrstrasse 13**
**D-8886 Wittislingen(DE)**

(74) Vertreter: **Patentanwälte Leinweber &**
**Zimmermann**
**Rosental 7/II Aufg.**
**D-8000 München 2(DE)**

(54) Schallabsorptionsplatte.

(57) Die Schallabsorptionsplatte besteht aus einer Vielzahl von mit einem Bindemittel überzogenen, anorganischen Teilchen, die nur an den Berührungsstellen der Überzüge haftend miteinander verbunden sind und Schallabsorptionskammern (3) unterschiedlicher Größe einschliessen. Beachtliche Leichtigkeit, hohe Stabilität, Unbrennbarkeit und dennoch einfache und preisgünstige Herstellbarkeit werden erzielt, wenn die Platte aus mit einem temperaturfesten anorganischen oder organischen Bindemittel verbundenen Bläglaskugeln bzw. -Körnern (1) gebildet ist. Zweckmäßigerweise sind zwischen den Blähglaskugeln bzw. -Körnern (1) sich in die Schallschluckkammern (3) erstreckende Metall-, Kohle-, Polyester- oder Mineralwollfasern (4) eingelagert. Beim erfindungsgemäßen Verfahren zur Herstellung derartiger Schallabsorptionsplatten werden die mit Bindemitteln, vorzugsweise auf Epoxiharzbasis, versetzten Blähglaskugeln bzw. -Körner (1) mit Polystyrolkugeln vorbestimmter Größe vermischt und nach deren Oberfläche benetzender Zugabe des Bindemittels beim folgenden heißen Verdichten eingeschmolzen. Gffs. können Altgummischnitzel oder gröbere Polyesterschnitzel (5) dem Blähglaskugel- bzw. -Körner-Bindemittel-Gemisch beigemischt werden.

EP 0 399 514 A1

## Schallabsorptionsplatte

Die Erfindung bezieht sich auf eine Schallabsorptionsplatte aus einer Vielzahl von mit einem Bindemittel überzogenen anorganischen Teilchen, die nur an den Berührungsstellen der Überzüge haftend miteinander verbunden sind und Schallabsorptionskammern unterschiedlicher Größe einschließen.

Bei bekannten Schallabsorptionsplatten dieser Art (DE-OS 16 58 997) finden Kieselsteine als Teilchen Einsatz, die mit einem Thermoplast als Bindemittel haftend verbunden sind. Derartige Platten sind kostspielig in der Herstellung und - insbesondere aufgrund des relativ großen Gewichts - schwierig in der Handhabung und bei ihrer Montage, zumal im Hinblick auf das Gewicht ihre Stabilität zu wünschen übrig läßt. Außerdem sind derartige Platten gegen Wärmeeinwirkungen besonders empfindlich. Glatte bzw. ebene Oberflächen lassen sich bei derartigen Platten kaum erreichen.

Der Erfindung liegt die Aufgabe zugrunde, eine Schallabsorptionsplatte der genannten Art zu schaffen, die sich durch ihre vergleichsweise Leichtigkeit, durch dennoch hohe Stabilität, auch bei höheren Temperaturen, durch ihre Unbrennbarkeit, durch ihre preisgünstige Herstellbarkeit und durch ihr großes Schallabsorptionsvermögen über einen weiten Frequenzbereich auszeichnet.

Die Schallabsorptionsplatte nach der Erfindung, bei der diese Aufgabe gelöst ist, ist im wesentlichen dadurch gekennzeichnet, daß die Platte aus mit einem temperaturfesten anorganischen oder organischen Bindemittel verbundenen Blähglaskugeln bzw. -Körnern gebildet ist. Eine derartige Schallabsorptionsplatte besitzt einerseits ein ausgezeichnetes Schallabsorptionsvermögen. Andererseits besteht sie in sehr vorteilhafter Weise aus Blähglaskugeln, die leicht aus Altglas herstellbar sind und bei denen es sich somit um ein besonders preisgünstiges Ausgangsmaterial handelt. Außerdem lassen sich im Bedarfsfall Schallabsorptionsplatten mit ebenen Außenflächen herstellen, da es lediglich eines leichten Zusammendrückens des Ausgangsmaterials zwischen zwei Formplatten bedarf, bevor das Bindemittel aushärtet.

Um die Stabilität der Schallabsorptionsplatte zu erhöhen, und dabei gleichzeitig das Schallabsorptionsvermögen zu erhöhen, hat es sich als vorteilhaft erwiesen, wenn zwischen den Blähkugeln bzw. -Körnern sich in die Schallschluckkammern erstreckende Metall-, Kohle-, Polyester- oder Mineralwollfasern eingelagert sind.

Die Erfindung richtet sich weiterhin auf ein Verfahren zur Herstellung derartiger Schallabsorptionsplatten. Bei diesem Verfahren werden die mit Bindemittel, vorzugsweise auf Epoxiharzbasis, vernetzten Blähglaskugeln bzw. -Körner mit Polystyrolkugeln vorbestimmter Größe vermischt und nach deren oberflächebenetzender Zugabe des Bindemittels beim folgenden heissen Verdichten eingeschmolzen. So werden auf besonders einfache Weise zusätzliche Hohlräume, die als Schallschluckkammern dienen, geschaffen, deren Größe sich durch Wahl entsprechend großer Polystyrolkugeln vorbestimmen läßt. Selbstverständlich lassen sich auch sehr kleine Polystyrolkugeln beimischen und einschmelzen, so daß entsprechend kleine Poren in der Plattenstruktur entstehen.

Als sehr zweckmäßig hat es sich herausgestellt, wenn Altgummischnitzel oder gröbere Polyesterschnitzel dem Blähglaskugel- bzw. -Körpern-Bindemittel-Gemisch beigemischt werden. Auf diese Weise lassen sich hervorragende Schalldämmeigenschaften der Schallabsorptionsplatte nach der Erfindung erzielen.

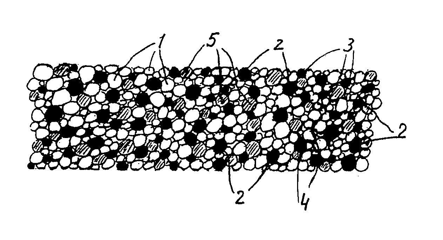

Weitere Einzelheiten, Vorteile und Merkmale ergeben sich aus der folgenden Beschreibung anhand der Zeichnung, in deren einziger Figur ein Ausschnitt der Schallabsorptionsplatte nach der Erfindung beispielsweise veranschaulicht ist.

Wie ersichtlich, besteht die Schallabsorptionsplatte aus einer Vielzahl von Blähglaskugeln bzw. -Körnern 1. Diese sind mit Hilfe eines temperaturfesten anorganischen oder organischen Bindemittels nur an den Berührungsstellen der Bindemittelüberzüge haftend miteinander verbunden. Die mit dem Bindemittel, vorzugsweise auf Epoxiharzbasis versetzten Blähglaskugeln bzw. -Körner 1 werden bei Herstellung der Platten zweckmäßigerweise mit Polystyrolkugeln vorbestimmter Größe vermischt. Beim folgenden heissen Verdichten nach deren oberflächebenetzender Epoxiharzzugabe zwischen nicht gezeigten Formplatten werden die Polystyrolkugeln eingeschmolzen und es verbleiben - in der Zeichnung schwarz angedeutete - Hohlräume 2, deren Größe der Größe der ursprünglichen Polystyrolkugeln in etwa entspricht. Diese Hohlräume 2 sorgen zusammen mit den vergleichsweise kleineren Hohlräumen 3 zwischen den Blähglaskugeln bzw. -Körnern 1 für die gewünschte Schallabsorption. Zusätzlich können zwischen die Blähglaskugeln bzw. -Körner 1 sich in die Schallschluckkammern 3 erstreckende Metall-, Kohle-, Polyesteroder Mineralwollfasern 4 eingelagert sein, wie dies im rechten Teil der Figur nur sehr schematisch angedeutet ist. Dieses zugegebene Fasermaterial fördert die Schallabsorption nicht unwesentlich. Als vorteilhaft hat es sich erwiesen, wenn dem Blähglaskugel- bzw. Körner-Bindemittel-Gemisch Altgummischnitzel oder gröbere Polyesterschnitzel 5 beigemischt werden.

Untersuchungen erfindungsgemäßer Schallabsorptionsplatten haben gezeigt, daß bei etwa 1200 Hz Absorptionswerte von 98 % gegenüber herkömmlichen Vergleichswerten von ca. 70% erreichbar sind.

**Ansprüche**

1. Schallabsorptionsplatte aus einer Vielzahl von mit einem Bindemittel überzogenen, anorganischen Teilchen, die nur an den Berührungsstellen der Überzüge haftend miteinander verbunden sind und Schallabsorptionskammern (3) unterschiedlicher Größe einschließen, dadurch gekennzeichnet, daß die Platte aus mit einem temperaturfesten anorganischen oder organischen Bindemittel verbundenen Blähglaskugeln bzw. -Körnern (1) gebildet ist.

2. Schallabsorptionsplatte nach Anspruch 1, dadurch gekennzeichnet, daß zwischen den Blähglaskugeln bzw. -Körnern (1) sich in die Schallschluckkammern (3) erstreckende Metall-, Kohle-, Polyester- oder Mineralwollfasern (4) eingelagert sind.

3. Verfahren zur Herstellung von Schallabsorptionsplatten nach Anspruch 1 oder 2, dadurch gekennzeichnet, daß die mit Bindemittel, vorzugsweise auf Epoxiharzbasis, vernetzten Blähglaskugeln bzw. -Körner (1) mit Polystyrolkugeln vorbestimmter Größe vermischt und nach deren Oberfläche benetzender Zugabe des Bindemittels beim folgenden heißen Verdichten eingeschmolzen werden.

4. Verfahren nach Anspruch 3, dadurch gekennzeichnet, daß Altgummischnitzel oder gröbere Polyesterschnitzel (5) dem Blähglaskugel- bzw. -Körner-Bindemittel-Gemisch beigemischt werden.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-1 473 345 (BIERNACKI) * Seite 1, Spalte 1, Zeile 15 - Seite 1, Spalte 2, Zeile 11; Anspruch 4; Figur 1 * | 1 | E 04 B 1/86 |
| Y | --- | 2 | |
| Y | DE-A-2 739 748 (WICK) * Seite 4, Zeilen 19-30; Figur 3 * | 2 | |
| A | --- | 3 | |
| A | US-A-3 634 562 (KOLE) * Spalte 2, Zeile 39 - Spalte 3, Zeile 27; Figuren 1,2 * | 3 | |
| A | --- AT-B- 384 642 (ISOVOLTA AG) * Seite 2, Zeilen 15-20 * | 4 | |
| A | --- FR-A-2 454 491 (SAUNIER) ----- | | |

**RECHERCHIERTE SACHGEBIETE (Int. Cl.5)**

E 04 B

Der vorliegende Recherchenbericht wurde für alle Patentansprüche erstellt

| Recherchenort | Abschlußdatum der Recherche | Prüfer |
|---|---|---|
| DEN HAAG | 06-08-1990 | PORWOLL H.P. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument